# EUROPEAN PATENT APPLICATION

(11) **EP 4 068 820 A1**
(43) Date of publication of application: **05.10.2022**
(21) Application number: 21744165.8
(22) Date of filing: 05.01.2021
(51) Int. Cl.: H04W 8/20, H04L 29/06

(54) **COMMUNICATION METHOD AND COMMUNICATION APPARATUS**

(30) Priority: 21.01.2020 CN 202010070437
(71) Applicant: HUAWEI TECHNOLOGIES CO., LTD., Shenzhen, Guangdong 518129 (CN)
(72) Inventor: ZHANG, Chengchen, Shenzhen, Guangdong 518129 (CN); DING, Hui, Shenzhen, Guangdong 518129 (CN)
(74) Representative: MERH-IP Matias Erny Reichl Hoffmann Patentanwälte PartG mbB
(86) International application number: PCT/CN2021/070328
(87) International publication number: WO 2021/147662

(57) **Abstract**

This application provides a communication method and a communication apparatus. When only a preset quantity of terminal devices are allowed to simultaneously use a user identifier, and a terminal device expects to use the user identifier, the terminal device sends a first message including the user identifier to a first network element. The first network element determines, based on information about the user identifier, whether the first terminal device is allowed to use the user identifier. Alternatively, the first network element requests a third network element to determine whether the first terminal device is allowed to use the user identifier, and the third network element returns a determining result to the first network element, so that the first network element can determine whether the terminal device is allowed to use the user identifier. In this way, the first network element manages the terminal device that uses the user identifier.

## Description

This application claims priority to Chinese Patent Application No. 202010070437.8, filed with the China National Intellectual Property Administration on January 21, 2020 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Current mobile networks are subscription-centric, and operators can determine, based on subscriptions of users, whether the users can access the networks. In the era in which one user usually has only one mobile phone, only limited services, such as calls and SMS messages, provided by operators are subscribed to. In this case, users require only such a subscription. However, currently, one user may have a plurality of devices (such as a mobile phone, a tablet computer, and a notebook computer). These devices may be shared by a plurality of users or may be owned by one user. A plurality of different services may be obtained by using one device, and one service may be obtained by using different devices. In addition, different authentication may need to be performed on a user when the user uses different services (for example, services from a third party). In this case, a subscription-only mode between users and operators cannot meet all requirements. Different services may be obtained with different identities (where the identity may be uniquely identified by a user identifier, and one user may have a plurality of different user identifiers) from different service providers (operators or third parties), and the identities are not in one-to-one correspondence with devices. For example, a game company signs an agreement with an operator, and the operator may provide services of different quality of service (quality of service, QoS) for the game company. Different players purchase different services from the game company. For example, QoS corresponding to common players is lower than QoS corresponding to very important person (very important person, VIP) players. The game company cares about accounts instead of user equipment used by the users. That is, the game company differentiates only the accounts provided by the users. Therefore, the operator provides services of different QoS for a player using different user accounts on same user equipment, and provides a service of same QoS for a player using a same user account on different user equipment. To identify different accounts, the user equipment provides different user identifiers for a network, and the network allocates different resources based on the different user identifiers.

Actually, an operator or a third party expects that one user identifier can be used only by a limited quantity of user equipments. For example, one game account can be usually logged in to on only one device at a time. However, in a conventional technology, a network side does not reject a resource request of a user that owns a valid user identifier, that is, the network side allows any quantity of user equipments to use a same user identifier.

### SUMMARY

This application provides a communication method and a communication apparatus, to enable a core network device to determine whether a terminal device is allowed to use a user identifier, and therefore to manage the terminal device that uses the user identifier.

According to a first aspect, a communication method is provided. The method includes: A first network element receives a first message sent by a first terminal device, where the first message includes a user identifier and is used by the first terminal device to request to use the user identifier. The first network element determines whether the first terminal device is allowed to use the user identifier, where only a preset quantity of terminal devices are allowed to simultaneously use the user identifier.

Optionally, the user identifier may be a network access identifier (network access identifier, NAI), an email address, or some digits, and may be permanent, for example, may be an international mobile subscriber identity (international mobile subscriber identity, IMSI), or may be temporary, for example, may be a temporary mobile subscriber identity (temporary mobile subscriber identity, TMSI).

Optionally, the first message may be a session establishment request or a session modification request.

Optionally, the first network element may be an access and mobility management function (access and mobility management function, AMF) or a session management function (session management function, SMF). The AMF may also be referred to as a mobility management network element, and the SMF may also be referred to as a session management network element.

Optionally, the method may further include: The first network element sends a second message to the first terminal device in response to the first message, where the second message indicates whether the first terminal device is allowed to use the user identifier. Therefore, the first terminal device may determine, based on the update message, whether the user identifier can be used.

According to the communication method provided in this application, when the terminal device requests to use the user identifier, the first network element may determine whether the terminal device is allowed to use the user identifier, to manage the user identifier, that is, to manage the terminal device that uses the user identifier.

With reference to the first aspect, in some implementations of the first aspect, that the first network element determines whether the first terminal device is allowed to use the user identifier includes: The first network element determines, based on information about the user identifier, whether the first terminal device is allowed to use the user identifier, where the information about the user identifier includes the preset quantity and a quantity of terminal devices that are currently using the user identifier.

It should be understood that the preset quantity is a maximum quantity of terminal devices that can simultaneously use the user identifier.

In this solution, the first network element may determine, based on the information about the user identifier, whether the first terminal device is allowed to use the user identifier. For example, when the quantity of terminal devices that are currently using the user identifier is equal to the preset quantity, the first network element determines that the first terminal device is not allowed to use the user identifier, to manage the terminal device that uses the user identifier.

Optionally, the information about the user identifier may further include a priority of using the user identifier by the first terminal device and a priority of using the user identifier by a terminal device that is currently using the user identifier.

Optionally, the information about the user identifier may further include a preemption capability of the first terminal device for the user identifier and/or preemption vulnerability of the terminal device that is currently using the user identifier.

The preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier.

Preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, where the second terminal device is any one of the terminal devices that are currently using the user identifier.

Optionally, the first message may include the priority of using the user identifier by the first terminal device and/or the preemption capability of the first terminal device for the user identifier.

In this solution, information such as the priority of using the user identifier, the preemption capability, and/or the preemption vulnerability is introduced, so that the terminal device that uses the user identifier can be more flexibly managed.

With reference to the first aspect, in some implementations of the first aspect, the method may further include: The first network element obtains a part or all of the information about the user identifier from a second network element based on the first message.

Optionally, the second network element may be a unified data management network element, namely, unified data management (unified data management, UDM).

With reference to the first aspect, in some implementations of the first aspect, if the first network element determines that the first terminal device is allowed to use the user identifier, the method may further include: The first network element sends an update message to the second network element, where the update message includes the user identifier and indicates that the first terminal device is allowed to use the user identifier. In this way, the second network element may update, based on the update message, information that is related to the user identifier and that is stored in the second network element, for example, the quantity of terminal devices that are currently using the user identifier.

With reference to the first aspect, in some implementations of the first aspect, that the first network element determines whether the first terminal device is allowed to use the user identifier includes: The first network element sends an authentication request message to a third network element based on the first message, where the authentication request message includes the user identifier and is used to request the third network element to determine whether the first terminal device is allowed to use the user identifier. The first network element receives an authentication response message that is sent by the third network element in response to the authentication request message, where the authentication response message indicates whether the first terminal device is allowed to use the user identifier. The first network element determines, based on the authentication response message, whether the first terminal device is allowed to use the user identifier.

In this solution, the third network element may determine, based on the information about the user identifier, whether the first terminal device is allowed to use the user identifier.

Optionally, the third network element may be an authentication, authorization, and accounting server.

Optionally, the first message and the authentication request message each include a priority of using the user identifier by the first terminal device and/or a preemption capability of the first terminal device for the user identifier. For a meaning of the preemption capability of the first terminal device for the user identifier, refer to the foregoing descriptions.

With reference to the first aspect, in some implementations of the first aspect, the method may further include: The first network element determines that a third terminal device is incapable of continuing to use the user identifier, where the third terminal device is a terminal device that is currently using the user identifier. The first network element sends a third message to the third terminal device, where the third indication message indicates that the third terminal device is not allowed to use the user identifier.

If preemption occurs, that is, the first network element determines that the first terminal device can use the user identifier and that the third terminal device cannot continue to use the user identifier, the first network element sends the third message to the third terminal device, and the third terminal device may release, based on the third message, a network resource allocated to the user identifier.

According to a second aspect, a communication method is provided. The method includes: A second network element receives a request message sent by a first network element, where the request message includes a user identifier and is used to request information about the user identifier. The second network element sends a response message to the first network element in response to the request message, where the response message includes the information about the user identifier, the information about the user identifier is used by the first network element to determine whether a first terminal device is allowed to use the user identifier, and only a preset quantity of terminal devices are allowed to simultaneously use the user identifier.

It should be understood that the request message may be used to request all (content or parameters) or only a part of the information about the user identifier. Correspondingly, the response message may include only the part or all of the information about the user identifier.

For content of the information about the user identifier, refer to the descriptions in the first aspect.

Optionally, the first network element is an AMF or an SMF.

Optionally, the second network element may be UDM.

According to the method provided in this application, the first network element may request all or the part of the information about the user identifier from the second network element. After receiving all or the part of the information about the user identifier from the second network element, the first network element may determine, based on all or the part of the information about the user identifier from the second network element and optionally with reference to a local configuration and/or content in a first message sent by the terminal device, whether the terminal device is allowed to use the user identifier, to manage the user identifier, that is, to manage the terminal device that uses the user identifier.

With reference to the second aspect, in some implementations of the second aspect, the method may further include: The second network element receives an update message sent by the first network element, where the update message includes the user identifier and indicates that the first terminal device is allowed to use the user identifier. In this way, the second network element may update, based on the update message, information that is related to the user identifier and that is stored in the second network element, for example, a quantity of terminal devices that are currently using the user identifier.

With reference to the second aspect, in some implementations of the second aspect, the method may further include: The second network element sends a fourth message to a session management network element, where the fourth message indicates that a third terminal device is not allowed to continue to use the user identifier, and the third terminal device is a terminal device that is currently using the user identifier.

Based on this solution, after receiving the fourth message, the session management network element may indicate the third terminal device to release a network resource allocated to the user identifier, to prevent the third terminal device from continuing to use the user identifier.

According to a third aspect, a communication method is provided. The method includes: A third network element receives an authentication request message sent by a first network element, where the authentication request message includes a user identifier, only a preset quantity of terminal devices are allowed to simultaneously use the user identifier, and the authentication request message is used to request the third network element to determine whether a first terminal device is allowed to use the user identifier. The third network element determines, based on information about the user identifier, whether the first terminal device is allowed to use the user identifier, where the information about the user identifier includes the preset quantity and a quantity of terminal devices that are currently using the user identifier. The third network element sends an authentication response message to the first network element in response to the authentication request message, where the authentication response message indicates whether the first terminal device is allowed to use the user identifier.

In this solution, the third network element may determine, based on the information about the user identifier, whether the terminal device is allowed to use the user identifier, to manage the user identifier, that is, to manage the terminal device that uses the user identifier.

Optionally, the first network element is an AMF or an SMF.

Optionally, the third network element may be an authentication, authorization, and accounting server.

For content included in the information about the user identifier, refer to the descriptions in the first aspect.

Optionally, the third network element may locally store all or a part of the information about the user identifier. When the third network element locally stores the part of the information about the user identifier, remaining content in the information about the user identifier may be provided by the first terminal device through the first network element. For example, a priority of using the user identifier by the first terminal device may be provided by the first terminal device through the first network element.

With reference to the third aspect, in some implementations of the third aspect, the method may further include: The third network element sends a fifth message to a session management network element, where the fifth message indicates that a third terminal device is not allowed to continue to use the user identifier, and the third terminal device is a terminal device that is currently using the user identifier.

Based on this solution, after receiving the fifth message, the session management network element may indicate the third terminal device to release a network resource allocated to the user identifier, to prevent the third terminal device from continuing to use the user identifier.

According to a fourth aspect, a communication method is provided. The method includes: A first terminal device generates a first message, where the first message includes a user identifier and is used by the first terminal device to request to use the user identifier, and only a preset quantity of terminal devices are allowed to simultaneously use the user identifier. The first terminal device sends the first message to a first network element.

Optionally, the method may further include: The first terminal device receives a second message that is sent by the first network element in response to the first message, where the second message indicates whether the first terminal device is allowed to use the user identifier.

According to the solution provided in this application, when expecting to use the user identifier, the terminal device may send the first message to the first network element to request the first network element to determine whether the first terminal device is allowed to use the user identifier, to manage the user identifier, that is, to manage the terminal device that uses the user identifier.

According to a fifth aspect, a communication apparatus is provided. The communication apparatus includes a module or a unit configured to perform the method according to any one of the first aspect to the fourth aspect or the possible implementations of the first aspect to the fourth aspect.

According to a sixth aspect, an apparatus is provided. The apparatus includes a processor. The processor is coupled to a memory, and may be configured to execute instructions in the memory, to enable the apparatus to perform the method according to any one of the first aspect to the fourth aspect or the possible implementations of the first aspect to the fourth aspect. Optionally, the apparatus further includes the memory. Optionally, the apparatus further includes an interface circuit, and the processor is coupled to the interface circuit.

According to a seventh aspect, a processor is provided. The processor includes an input circuit, an output circuit, and a processing circuit. The processing circuit is configured to: receive a signal through the input circuit, and transmit a signal through the output circuit, to enable the processor to perform the method according to any one of the first aspect to the fourth aspect or the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by a component, for example but not limited to, a receiver, a signal output by the output circuit may be output to a component, for example but not limited to, a transmitter and transmitted by the transmitter, and the input circuit and the output circuit may be a same circuit, where the circuit is separately used as the input circuit and the output circuit at different moments. Specific implementations of the processor and the various circuits are not limited in embodiments of this application.

According to an eighth aspect, a processing apparatus is provided. The processing apparatus includes a processor and a memory. The processor is configured to: read instructions stored in the memory, receive a signal through a receiver, and transmit a signal through a transmitter, to perform the method according to any one of the first aspect to the fourth aspect or the possible implementations of the first aspect to the fourth aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

The processing apparatus in the eighth aspect may be a chip. The processor may be implemented by hardware or software. When the processor is implemented by hardware, the processor may be a logic circuit, an integrated circuit, or the like. When the processor is implemented by software, the processor may be a general-purpose processor, and may be implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method according to any one of the first aspect to the fourth aspect or the possible implementations of the first aspect to the fourth aspect.

According to a tenth aspect, a computer-readable medium is provided. The computer-readable medium stores a computer program (which may also be referred to as code or instructions). When the computer program is run on a computer, the computer is enabled to perform the method according to any one of the first aspect to the fourth aspect or the possible implementations of the first aspect to the fourth aspect.

According to an eleventh aspect, a communication system is provided. The communication system includes at least two of the foregoing first network element, second network element, and third network element. Optionally, the communication system may further include the foregoing first terminal device.

### BRIEF DESCRIPTION OF DRAWINGS

FIG. 1 is a schematic diagram of a communication system applicable to this application;
FIG. 2 is a schematic flowchart of a communication method according to this application;
FIG. 3 is a schematic flowchart of a specific example of a communication method according to this application;
FIG. 4 is a schematic flowchart of another specific example of a communication method according to this application;
FIG. 5 is a schematic flowchart of a specific example of a communication method according to this application;
FIG. 6 is a schematic flowchart of another specific example of a communication method according to this application;
FIG. 7 is a schematic flowchart of a specific example of a communication method according to this application;
FIG. 8 is a schematic diagram of a structure of a communication apparatus according to this application;
FIG. 9 is a schematic diagram of a structure of a network device according to this application; and
FIG. 10 is a schematic diagram of a structure of a terminal device according to this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a 5th generation (5th generation, 5G) system, a new radio (new radio, NR) system, and other communication systems that may appear in the future.

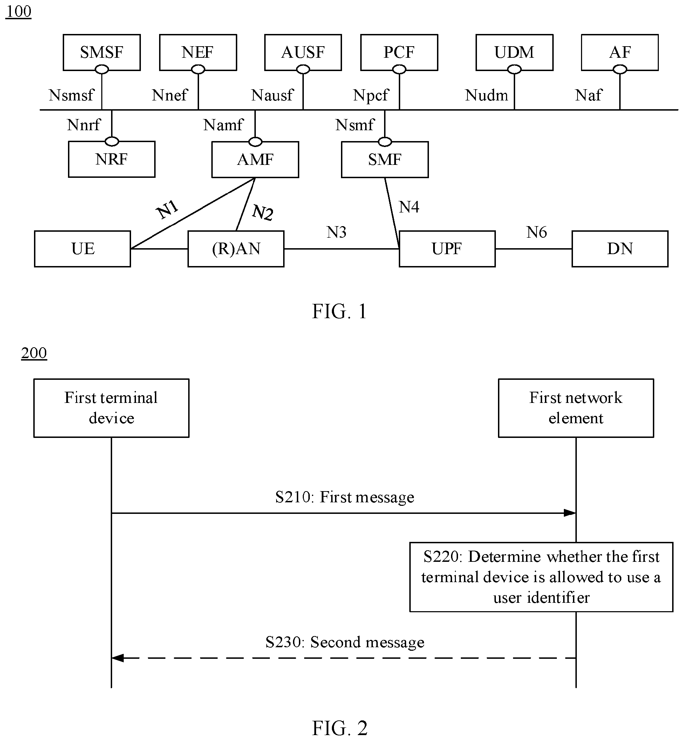

FIG. 1 is a schematic diagram of a communication system applicable to this application. As shown in FIG. 1, the system 100 may include a short message service function (short message service function, SMSF), a network exposure function (network exposure function, NEF), an authentication server function (authentication server function, AUSF), a policy control function (policy control function, PCF), unified data management (unified data management, UDM), an application function (application function, AF), a network repository function (network repository function, NRF), an access and mobility management function (access and mobility management function, AMF), a session management function (session management function, SMF), a (radio) access network ((radio) access network, (R)AN), a data network (data network, DN), a user plane function (user plane function, UPF), and user equipment (user equipment, UE). Main functions of the network elements are described as follows.

The SMSF is the short message service function. The SMSF is mainly responsible for short message service-related control functions, including forwarding a short message data packet between the AMF and a short message center and performing short message charging control based on a configuration of an operator and subscription information of a user.

The NEF is the network exposure function. The NEF is mainly responsible for exposing a part of capabilities on a network side to a third-party application function, to support the third-party application function to customize service parameters and subscribe to user status events from a core network.

The AUSF is the authentication server function. The AUSF is mainly responsible for performing authentication on a user in a home network, forwarding an authentication vector between the AMF and the UDM, and so on.

The PCF is the policy control function. The PCF is mainly responsible for session-level or service flow-level policy control functions such as charging, quality of service (quality of service, QoS) bandwidth assurance, mobility management, and UE policy decision.

The UDM is the unified data management. The UDM is mainly responsible for functions such as subscription data management and user access authorization.

The AF is the application function. The AF mainly transfers requirements of an application side on the network side, for example, QoS requirements. The AF may be managed by a third party or an operator. The AF may be a third-party function entity, or may be an application service deployed by the operator, for example, an IP multimedia subsystem (IP Multimedia Subsystem, IMS) voice call service.

The NRF is the network repository function, and is used for network element service registration and discovery functions.

The AMF is the access and mobility management function. The AMF mainly performs functions such as mobility management and access authentication/authorization. In addition, the AMF is further responsible for transferring user policies between the UE and the PCF.

The SMF is the session management function. The SMF mainly performs functions such as session management, execution of a control policy delivered by the PCF, UPF selection, and UE IP address assignment.

The UPF is the user plane function entity. As an interface UPF with the data network, the UPF implements functions such as user plane data forwarding, session/flow-level charging statistics, and bandwidth throttling.

The AN is the access network, and corresponds to different access networks in 5G, for example, wired access and wireless base station access.

The DN is the data network. For example, an authentication, authorization, and accounting (Authentication, Authorization, and Accounting, AAA) server may be located in the DN, or an AAA server corresponding to a specific DN may be located in a 5GC.

It should be understood that the names of the network elements shown in FIG. 1 are merely names, and constitute no limitation on the functions of the network elements. In a 5G network and other future networks, the foregoing network elements may also have other names. This is not specifically limited in embodiments of this application. For example, in a 6G network, some or all of the foregoing network elements may still use terms in 5G, or may have other names. A general description is provided herein, and details are not described below. Similarly, interfaces or service-oriented interfaces between the network elements shown in FIG. 2 are merely an example. In the 5G network and the other future networks, interfaces or service-oriented interfaces between the network elements may not be the interfaces shown in the figure. This is not limited in this application.

It should be further understood that embodiments of this application are not limited to the system architecture shown in FIG. 1. For example, a communication system applicable to this application may include more or fewer network elements or devices. The devices or the network elements in FIG. 1 may be hardware, may be software obtained through function division, or may be a combination thereof. The devices or the network elements in FIG. 1 may communicate with each other via another device or network element.

In this application, the UE may also be referred to as a terminal device. The terminal device may communicate with one or more core networks (core networks, CNs) through an AN device. The terminal device may be referred to as an access terminal, a terminal, a subscriber unit, a subscriber station, a mobile station, a remote station, a remote terminal, a mobile device, a user terminal, a wireless network device, a user agent, or a user apparatus. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another device connected to a wireless modem, a vehicle-mounted device, a wearable device, a terminal device in the Internet of things, a terminal device in the Internet of vehicles, a terminal device in any form in a future network, or the like.

The AN device may be a radio access network (radio access network, RAN) device. The RAN device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or may be a module or a unit that implements a part of functions of a base station, for example, may be a central unit (central unit, CU) or a distributed unit (distributed unit, DU). A specific technology and a specific device form that are used by the RAN device are not limited in embodiments of this application.

The following describes a communication method provided in this application.

FIG. 2 is a schematic flowchart of a communication method 200 according to this application. The following describes the method 200.

S210: A first terminal device sends a first message to a first network element.

The first network element is a core network device. For example, the first network element may be an SMF or an AMF

The first message includes a user identifier and is used by the first terminal device to request to use the user identifier.

Only a preset quantity of terminal devices are allowed to simultaneously use the user identifier. That is, only the preset quantity of terminal devices are allowed to simultaneously use the user identifier in a same time period. For example, only one terminal device is allowed to use the user identifier at a time, or only three terminal devices are allowed to simultaneously use the user identifier.

It may be understood that the preset quantity is a maximum quantity of terminal devices that can simultaneously use the user identifier.

It should be understood that, that a terminal device (for example, the first terminal device) uses the user identifier may also be understood as that a user obtains a network resource by using the terminal device. It should be understood that, in this application, the user may be uniquely determined by using the user identifier.

For example, the user identifier may be a network access identifier (network access identifier, NAI), an email address, or some digits, and may be permanent, for example, may be an international mobile subscriber identity (international mobile subscriber identity, IMSI), or may be temporary, for example, may be a temporary mobile subscriber identity (temporary mobile subscriber identity, TMSI).

Optionally, the first message may further include information about the network resource. The network resource is a network resource requested by the first terminal device to use the user identifier. For example, the network resource may be a slice or a QoS flow (flow). The information about the network resource may be an identifier of the network resource, for example, an identifier of the slice or the QoS flow. However, this is not limited in this application.

For example, the first message may be a session establishment request or a session modification request.

If the user expects to obtain the network resource by using the first terminal device to use the user identifier, the user sends a session-related request to a network side. If requesting the network resource for the user identifier by using a new session, the first terminal device sends the session establishment request to the first network element. If requesting the network resource for the user identifier by using an existing session, the first terminal device sends the session modification request to the first network element. One session may be used to request a network resource for only one user identifier, or may be used to request network resources for a plurality of user identifiers. This is not limited in this application. The network resource herein may be a resource allocated by a (R)AN to the user identifier, may be a resource allocated by a core network to the user identifier, or may be another resource. This is not limited in this application.

For example, if the first network element is the AMF, the first terminal device may transmit the session establishment/modification request to the AMF by using a NAS transport message. If the first network element is the SMF, the first terminal device may first transmit the session establishment/modification request to the AMF by using a NAS transport message, and then the AMF forwards the session establishment/modification request in the NAS transport message to the SMF by invoking a service of the SMF.

S220: The first network element determines whether the first terminal device is allowed to use the user identifier.

For example, the first network element may determine, in the following two manners (namely, a manner 1 and a manner 2), whether the first terminal device is allowed to use the user identifier.

### Manner 1

The first network element may determine, based on information about the user identifier, whether the first terminal device is allowed to use the user identifier.

The information about the user identifier may include the preset quantity and a quantity of terminal devices that are currently using the user identifier.

The information about the user identifier may be information that is not related to a specific network resource. It should be understood that, using the user identifier may be understood as that the user uses the network resource by using the terminal device.

The information about the user identifier may alternatively be information related to a specific network resource. For example, if the first terminal device requests a resource of a slice #1 for the user identifier, the information about the user identifier may be associated with the slice #1. That is, the quantity of terminal devices that are currently using the user identifier is actually a quantity of terminal devices that are currently using the user identifier by using the slice #1, and the preset quantity is actually a maximum quantity of terminal devices that can simultaneously use the user identifier by using the slice #1.

It should be understood that the user identifier may also be used by using another network resource (for example, a slice #2). In this case, there is also information that is about the user identifier and that is associated with the slice #2, for example, a quantity of terminal devices that are currently using the user identifier by using the slice #2 and a maximum quantity of terminal devices that can simultaneously use the user identifier by using the slice #2.

It should be understood that using the user identifier by using a network resource (for example, the slice #1) may be understood as that the user uses the network resource by using the terminal device. In this application, the user may be uniquely determined by using the user identifier.

To make the following descriptions more concise, the following definitions are provided:
(1) The quantity of terminal devices that are currently using the user identifier is defined as Nₜ.
(2) The preset quantity is defined as Nmax.
(3) Any terminal device that is currently using the user identifier is defined as an online terminal device.

For example, if Nₜ=Nmax, the first network element may determine that the first terminal device is not allowed to use the user identifier. If Nₜ<Nmax, the first network element may determine that the first terminal device is allowed to use the user identifier.

Alternatively, in some abnormal cases, for example, when Nₜ>Nmax, the first network element may also determine that the first terminal device is not allowed to use the user identifier.

Optionally, the information about the user identifier may further include a priority of using the user identifier by the first terminal device and a priority of using the user identifier by each online terminal device.

A priority of using the user identifier by a terminal device may also be understood as a priority of using the user identifier on the terminal device. For example, if the user expects to preferentially use, on a mobile phone of the user, an account (namely, an example of the user identifier) owned by the user, next use the account on a tablet computer of the user, and then use the account on a device of another user, a priority of using the account by the mobile phone of the user is the highest, a priority of using the account by the tablet computer is the second, and a priority of using the account by the device of the another user is the lowest.

For example, when Nₜ=Nmax, whether the first terminal device is allowed to use the user identifier may be determined with reference to the priority of using the user identifier by the first terminal device and the priority of using the user identifier by each online terminal device.

For example, when Nₜ=Nmax, if the priority of using the user identifier by the first terminal device is higher than (or higher than or equal to) a priority of using the user identifier by an online terminal device #m, the first network element may determine that the first terminal device is allowed to use the user identifier and that the online terminal device #m cannot continue to use the user identifier. For another example, when Nₜ=Nmax, if the priority of using the user identifier by the first terminal device is lower than or equal to (or lower than) the priority of using the user identifier by any online terminal device, the first network element may determine that the first terminal device is not allowed to use the user identifier.

The online terminal device #m herein may be any online terminal device whose priority of using the user identifier is lower than or equal to (or lower than) the priority of using the user identifier by the first terminal device, or may be an online terminal device with a lowest priority of using the user identifier among all online terminal devices whose priorities of using the user identifier are lower than or equal to (or lower than) the priority of using the user identifier by the first terminal device.

Optionally, the information about the user identifier may further include a preemption capability of the first terminal device for the user identifier and/or preemption vulnerability of each online terminal device.

The preemption capability of the first terminal device for the user identifier means: when Nₜ=Nmax, if the priority of using the user identifier by the first terminal device is higher than (or higher than or equal to) a priority of using the user identifier by one or more online terminal devices, whether the first terminal device can use the user identifier.

Preemption vulnerability of a second terminal device means: when Nₜ=Nmax, if the priority of using the user identifier by the first terminal device is higher than (or higher than or equal to) a priority of using the user identifier by the second terminal device, whether the first terminal device is allowed to use the user identifier, and whether the second terminal device is prohibited from continuing to use the user identifier. In other words, the preemption vulnerability of the second terminal device indicates: when Nₜ=Nmax, if the priority of using the user identifier by the first terminal device is higher than (or higher than or equal to) the priority of using the user identifier by the second terminal device, whether the second terminal device can be preempted. It should be understood that the second terminal device is a general description, and may be any online terminal device.

For example, when Nₜ=Nmax, whether the first terminal device is allowed to use the user identifier may be determined with reference to the priority of using the user identifier by the first terminal device, the priority of using the user identifier by each online terminal device, and the preemption capability of the first terminal device for the user identifier and/or the preemption vulnerability of each online terminal device.

For example, when Nₜ=Nmax, if the priority of using the user identifier by the first terminal device is higher than (or higher than or equal to) a priority of using the user identifier by an online terminal device #m, the preemption capability of the first terminal device for the user identifier indicates that the first terminal device can use the user identifier, and preemption vulnerability of the online terminal device #m indicates that the online terminal device #m can be preempted, the first network element may determine that the first terminal device is allowed to use the user identifier, and that the online terminal device #m cannot continue to use the user identifier.

The terminal device #m herein may be an online terminal device with a lowest priority of using the user identifier among online terminal devices whose preemption vulnerability indicates that the online terminal devices can be preempted. Alternatively, if there are a plurality of online terminal devices with a lowest priority of using the user identifier among online terminal devices whose preemption vulnerability indicates that the online terminal devices can be preempted, the terminal device #m may be any one of the plurality of online terminal devices. Alternatively, the terminal device #m may be any online terminal device whose priority of using the user identifier is lower than or equal to (or equal to) the priority of using the user identifier by the first terminal device among online terminal devices whose preemption vulnerability indicates that the online terminal devices can be preempted.

For another example, when Nₜ=Nmax, if there are only an online terminal device #a and an online terminal device #b whose priorities of using the user identifier among all the online terminal devices are lower than (or lower than or equal to) the priority of using the user identifier by the first terminal device, and preemption vulnerability of the online terminal device #a and the online terminal device #b indicates that the online terminal device #a and the online terminal device #b cannot be preempted, the first network element may determine that the first terminal device is not allowed to use the user identifier. For still another example, when Nₜ=Nmax, if preemption vulnerability of all the online terminal devices indicates that the online terminal devices cannot be preempted, the first network element may determine that the first terminal device is not allowed to use the user identifier. Alternatively, when Nₜ=Nmax, if the preemption capability of the first terminal device for the user identifier indicates that the first terminal device cannot use the user identifier, the first network element may determine that the first terminal device is not allowed to use the user identifier.

Optionally, in the manner 1, a part or all of the information about the user identifier may be obtained by the first network element from a second network element after the first network element receives the first message.

For example, Nₜ may be obtained by the first network element from the second network element. For example, the priority of using the user identifier by each online terminal device and the preemption vulnerability of each online terminal device may also be obtained by the first network element from the second network element.

The second network element may be, for example, UDM. However, this is not limited in this application.

Optionally, a part of the information about the user identifier may be included by the first terminal device in the first message. For example, the priority of using the user identifier by the first terminal device may be carried in the first message.

Optionally, Nmax may be configured by the first network element, in other words, the first network element stores these parameters. Alternatively, these parameters may be obtained by the first network element from the second network element.

### Manner 2

After receiving the first message, the first network element may send a request to a third network element, to request the third network element to determine whether the first terminal device is allowed to use the user identifier. The third network element may notify the first network element of a result, so that the first network element can determine whether the first terminal device is allowed to use the user identifier.

In this manner, the third network element determines, based on information about the user identifier, whether the first terminal device is allowed to use the user identifier. For a specific manner of determining, by the third network element based on the information about the user identifier, whether the first terminal device is allowed to use the user identifier, refer to the foregoing description of determining, by the second network element, whether the first terminal device is allowed to use the user identifier. Details are not described herein again.

For example, the third network element may be an authentication, authorization, and accounting server, namely, an AAA server, where the AAA server may also be referred to as a DN-AAA server. The authentication, authorization, and accounting server may be located in the core network, or may be located in a DN. A specific existence form and a specific location of the third network element are not limited in this application.

Optionally, in the manner 2, a part of the information about the user identifier may be included by the first terminal device in the first message. For example, the priority of using the user identifier by the first terminal device may be carried in the first message.

Optionally, the method may further include the following step:

S230: The first network element sends a second message to the first terminal device.

In S220, if the first network element determines that the first terminal device is allowed to use the user identifier, the second message may indicate that the first terminal device is allowed to use the user identifier; or if the first network element determines that the first terminal device is not allowed to use the user identifier, the second message may indicate that the first terminal device is not allowed to use the user identifier.

Optionally, the second message may further include a reject cause, for example, that the quantity of terminal devices that are using the user identifier has reached a maximum value, that the user identifier has been used by another terminal device, or that the user identifier is invalid (for example, the second network element has no information related to the user identifier).

In conclusion, according to the communication method provided in this application, when the terminal device requests to use the user identifier, the core network device may determine whether the terminal device is allowed to use the user identifier, to manage the user identifier.

The following describes the method provided in this application in more detail with reference to specific examples.

It should be understood that, for any method described below, these steps or operations in the method are merely examples, and in an actual operation, other operations or variations of some operations in the method may alternatively be performed to implement the method. In addition, for a method shown in any accompanying drawing, steps in the method may be performed in a sequence different from that presented in the figure, and not all operations in the figure may need to be performed.

It should be further understood that, for content that appears in the following and that has been explained and described in the foregoing, refer to the descriptions above unless otherwise stated below. For example, for a meaning of the priority of using the user identifier by the first terminal device and a possible form of the user identifier, refer to the foregoing descriptions.

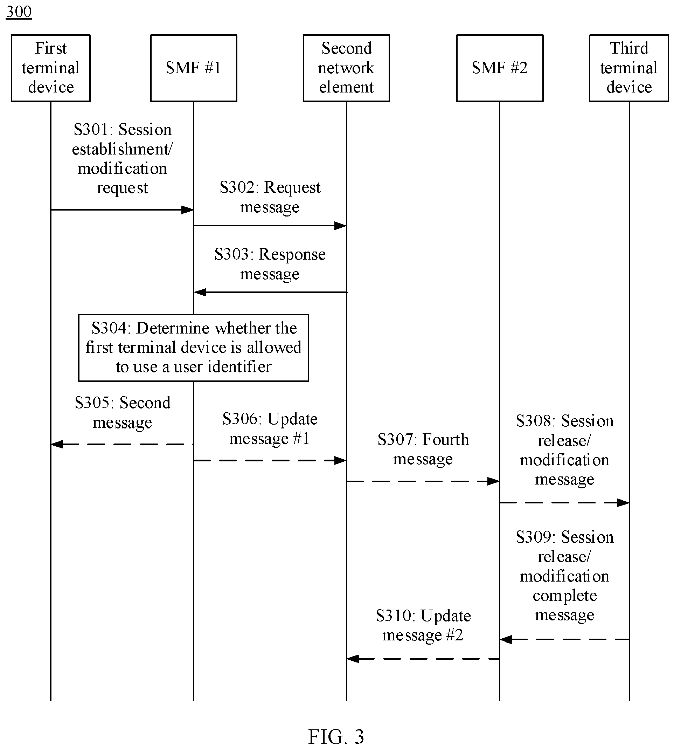

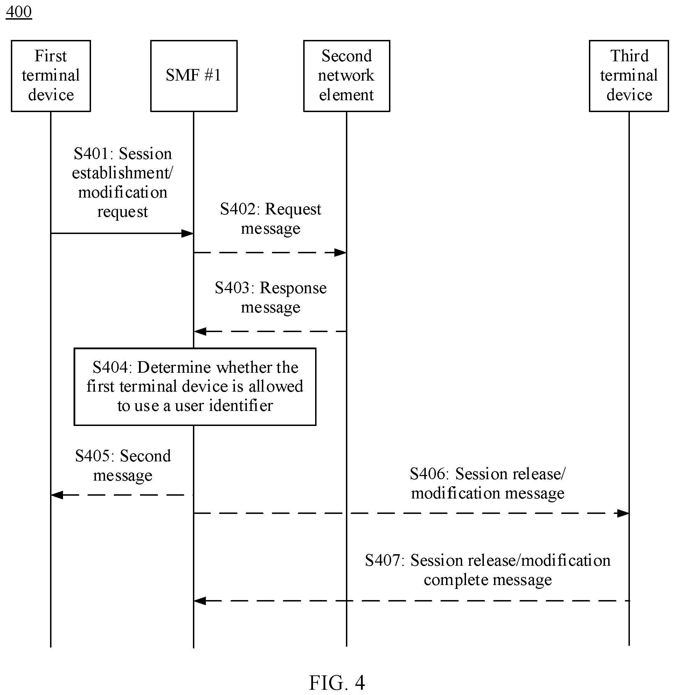

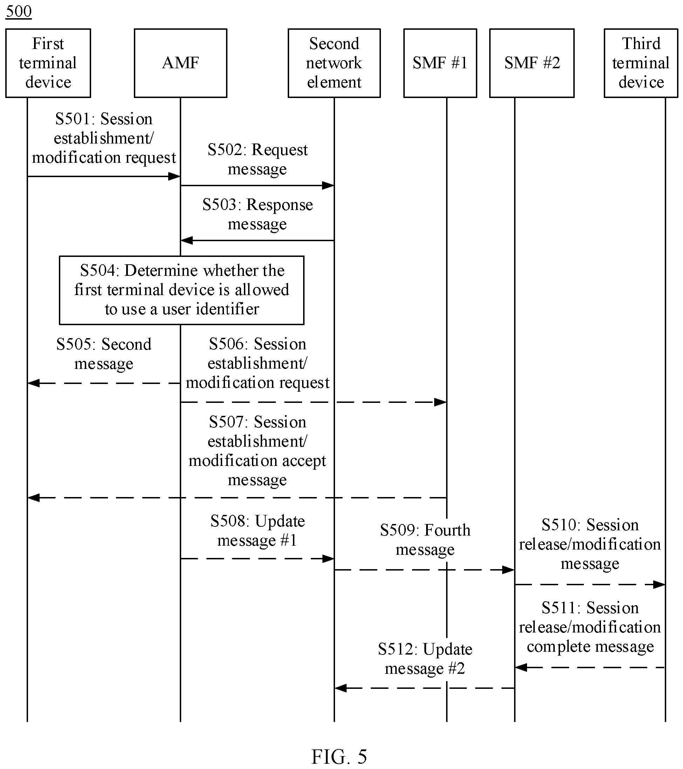

First, a procedure for implementing the method provided in this application in the foregoing manner 1 is described with reference to FIG. 3 to FIG. 5. For two specific examples in which the first network element is the SMF (namely, an SMF #1 below), refer to FIG. 3 and FIG. 4. For a specific example in which the first network element is the AMF, refer to FIG. 5.

FIG. 3 is a schematic flowchart of a specific example of a communication method 300 according to this application. In the method 300, it is assumed that different SMFs may establish or modify sessions to obtain network resources for a same user identifier.

S301: A first terminal device sends a session establishment/modification request to an SMF #1, where the session establishment/modification request includes a user identifier.

Optionally, the session establishment/modification request may further include first information, and the first information is information related to both the first terminal device and the user identifier.

For example, the first information may include one or more of the following:
a priority of using the user identifier by the first terminal device, a preemption capability of the first terminal device for the user identifier, and preemption vulnerability of the first terminal device.

The preemption vulnerability of the first terminal device means: if a quantity of terminal devices that are currently using the user identifier is equal to Nmax, and a priority of using the user identifier by a terminal device (denoted as a terminal device #n below) that currently requests to use the user identifier is higher than (or higher than or equal to) the priority of using the user identifier by the first terminal device, whether the terminal device #n is allowed to use the user identifier, and whether the first terminal device is prohibited from continuing to use the user identifier.

It should be understood that the "quantity of terminal devices that are currently using the user identifier" herein is a quantity of terminal devices that are using the user identifier when the terminal device #n requests to use the user identifier. The "quantity of terminal devices that are currently using the user identifier" above is a quantity of terminal devices that are using the user identifier when the first terminal device requests to use the user identifier.

It should be further understood that the first information may be information related to a specific network resource. For example, the first information may be information related to a network resource requested by the first terminal device. For example, if the first terminal device requests to use the user identifier by using a slice #1, the priority of using the user identifier by the first terminal device is a priority of using the user identifier by the first terminal device by using the slice #1. Meanings of other content in the first information are similar, and details are not described herein again.

S302: The SMF #1 sends a request message to a second network element, where the request message includes the user identifier.

After receiving the first message, the SMF #1 sends the request message to the second network element, to request the second network element to return a part or all of information about the user identifier.

In a manner, the request message may include some specific information, and the specific information is information requested by the SMF #1. The second network element may return corresponding content to the SMF #1 based on the information requested by the SMF #1.

For example, the information requested by the SMF #1 may include a quantity of terminal devices that are currently using the user identifier. Correspondingly, the second network element may return a value of Nₜ to the SMF #1 based on the information requested by the SMF #1.

Optionally, the information requested by the SMF #1 may further include a preset quantity. Correspondingly, the second network element may return a value of Nmax to the SMF #1. For example, if the SMF #1 does not locally configure the value of Nmax, the SMF #1 may request the value of Nmax from the second network element.

Optionally, the information requested by the SMF #1 may further include one or more of the following: a priority of using the user identifier by each online terminal device, preemption vulnerability of each online terminal device, or information that is about a network resource and that is described above.

Optionally, the SMF #1 may further request the first information from the second network element. For example, when the session establishment/modification request does not include the first information, the SMF #1 may request the first information from the second network element.

In another manner, the request message may alternatively not include information requested by the SMF #1. In this case, response information, namely, information that needs to be returned by the second network element to the SMF #1 after the second network element receives the request message, may be agreed upon in advance.

For example, the response information may include a quantity of terminal devices that are currently using the user identifier.

Optionally, the response information may further include a value of Nmax. Optionally, the response information may further include one or more of the following: a priority of using the user identifier by each online terminal device, preemption vulnerability of each online terminal device, or information that is about a network resource and that is described above.

Optionally, the response information may further include the first information.

In addition, the information requested by the SMF #1 or the information returned by the second network element to the SMF #1 may be a subscription between a user and an operator, a subscription between a user and a third party, a joint subscription between a user and both an operator and a third party, or a subscription in another form. This is not limited in this application.

Optionally, the method may further include:

If the SMF #1 receives the session establishment request, and has no session management subscription data related to the first terminal device, the SMF #1 queries UDM for the session management subscription data.

If the SMF #1 receives the session modification request, and stores session management subscription data previously queried from UDM, the SMF #1 may not query the UDM for the session management subscription data again.

It should be understood that a sequence between S302 and the operation of querying the UDM for the session management subscription data by the SMF #1 is not limited in this application.

Optionally, the second network element and the UDM may be a same network element, in other words, the second network element may be the UDM. It should be understood that the second network element and the UDM may alternatively not be a same network element. This is not limited in this application.

S303: The second network element sends a response message to the SMF #1 in response to the request message.

The second network element returns the response message to the SMF #1 based on the request message sent by the SMF #1. The response message may include the information requested by the SMF #1 or the response information agreed upon in advance by the SMF #1 and the second network element.

It should be noted that if the second network element is the UDM, and the SMF #1 needs to query the UDM for the session management subscription data, the response message may include the session management subscription data, the session management subscription data and content carried in the response message may be sent by using a same message, or the session management subscription data and content carried in the response message may be sent by using different messages. How the UDM sends the response message (or the content carried in the response message) and the session management subscription data is not specifically limited in this application.

It may be understood that if the second network element has no information related to the user identifier, the second network element sends a reject message to the SMF #1. Optionally, the reject message may include a reject cause. For example, the reject cause is that the second network element has no information related to the user identifier.

S304: The SMF #1 determines, based on the response message, whether the first terminal device is allowed to use the user identifier.

That is, the SMF #1 determines, based on the response message, whether to accept the session establishment/modification request.

For example, if the response message includes all parameters in the information about the user identifier, the SMF #1 may determine, based on the response message, whether the first terminal device is allowed to use the user identifier.

For example, if the response message includes a part of parameters in the information about the user identifier, the SMF #1 may determine, further with reference to the first information sent by the first terminal device and/or a local configuration parameter of the SMF #1, whether the first terminal device is allowed to use the user identifier. The local configuration parameter of the SMF #1 may include, for example, the value of Nmax.

In conclusion, the SMF #1 may determine, based on the foregoing information about the user identifier or the parameter in the information about the user identifier, whether the first terminal device is allowed to use the user identifier. For a specific manner of determining, based on the information about the user identifier, whether the first terminal device is allowed to use the user identifier, refer to the manner 1 in the method 200. For example, if the information about the user identifier includes only Nₜ and Nmax, and if Nₜ=Nmax, the first network element may determine that the first terminal device is not allowed to use the user identifier; or if Nₜ<Nmax, the first network element may determine that the first terminal device is allowed to use the user identifier. If the information about the user identifier includes only Nₜ, Nmax, the priority of using the user identifier by the first terminal device, and the priority of using the user identifier by each online terminal device, and if Nₜ<Nmax, the first network element may determine that the first terminal device is allowed to use the user identifier; if Nₜ=Nmax, and the priority of using the user identifier by the first network element is higher than (or higher than or equal to) a priority of using the user identifier by an online terminal device, the first network element may determine that the first network element is allowed to use the user identifier, and that the online terminal device is not allowed to continue to use the user identifier; or if Nₜ=Nmax, and the priority of using the user identifier by the first network element is lower than or equal to (or lower than) the priorities of using the user identifier by all the online terminal devices, the first network element may determine that the first network element is not allowed to use the user identifier. If the information about the user identifier includes Nₜ, Nmax, the priority of using the user identifier by the first terminal device, the priority of using the user identifier by each online terminal device, the preemption capability of the first terminal device for the user identifier, and the preemption vulnerability of each online terminal device, and if Nₜ<Nmax, the first network element may determine that the first terminal device is allowed to use the user identifier; or if Nₜ=Nmax, the priority of using the user identifier by the first network element is higher than (or higher than or equal to) a priority of using the user identifier by an online terminal device, the preemption capability of the first terminal device for the user identifier indicates that the first terminal device can perform preemption, and preemption vulnerability of the online terminal device indicates that the online terminal device can be preempted, the first network element may determine that the first network element is allowed to use the user identifier, and that the online terminal device is not allowed to continue to use the user identifier.

S305: The SMF #1 sends a second message to the first terminal device.

In S304, if the SMF #1 determines that the first terminal device is allowed to use the user identifier, the second message may be a session establishment/modification accept message, where the message indicates that the first terminal device is allowed to use the user identifier. If the SMF #1 determines that the first terminal device is not allowed to use the user identifier, the second message may be a session establishment/modification reject message, where the message indicates that the first terminal device is not allowed to use the user identifier.

Optionally, the session establishment/modification reject message may further include a reject cause, for example, that the quantity of terminal devices that are using the user identifier has reached a maximum value, that the user identifier has been used by another terminal device, or that the user identifier is invalid (the second network element has no information related to the user identifier).

S306: The SMF #1 sends an update message #1 (namely, an example of an update message) to the second network element.

In S304, if the SMF #1 determines that the first terminal device is allowed to use the user identifier, the SMF #1 may further send the update message #1 to the second network element, where the update message #1 indicates that the first terminal device is allowed to use the user identifier. The second network element may update, based on the update message #1, some information such as the quantity of terminal devices that are currently using the user identifier.

Optionally, the update message #1 may further include the first information. After receiving the update message #1, the SMF #1 may store the first information.

Optionally, the update message #1 may further include the information that is about the network resource and that is described in S210.

Optionally, if the SMF #1 further determines, when determining that the first terminal device is allowed to use the first identifier, that an online terminal device (denoted as a third terminal device below) cannot continue to use the user identifier, that is, the first terminal device performs preemption, the update message #1 may further include indication information, where the indication information may indicate that the third terminal device is preempted by the first terminal device. For example, the indication information may include an identifier of the third terminal device. The identifier of the third terminal device may be, for example, a SUPI or another identifier that can uniquely identify the third terminal device. A specific form of the identifier of the terminal device is not limited in this application.

It should be understood that a sequence between S305 and S306 is not limited in this application.

S307: The second network element sends a fourth message to an SMF #2.

When preemption occurs, the second network element may send the fourth message to the SMF #2 connected to the preempted third terminal device. The fourth message may include the user identifier and the identifier of the third terminal device, and indicates that the third terminal device is not allowed to continue to use the user identifier.

For example, if the second network element receives the indication information from the SMF #1, and the indication information includes the identifier of the third terminal device, the second network element may determine the preempted third terminal device based on the indication information.

For example, if the second network element does not receive, from the SMF #1, the indication information including the identifier of the third terminal device, the second network element may determine the preempted third terminal device with reference to a local configuration parameter or the like.

S308: The SMF #2 sends a session release/modification message to the third terminal device.

For example, if a session is used only for a service related to the user identifier, the SMF #2 may send the session release message to directly release the session; otherwise, the SMF #2 may send the session modification message to release only a network resource allocated to the user identifier.

Optionally, the session release/modification message may include a cause, for example, that the user identifier has been occupied.

S309: The third terminal device returns a session release/modification complete message to the SMF #2.

After releasing the related session or network resource, the third terminal device returns the session release/modification complete message to the SMF #2.

S310: The SMF #2 sends an update message #2 to the second network element.

This step is an optional step.

The update message #2 is used to notify the second network element that the network resource of the user identifier on the third terminal device has been released. After receiving the update message #2, the second network element may delete information related to both the third terminal device and the user identifier, for example, a priority of using the user identifier by the third terminal device and/or preemption vulnerability of the third terminal device.

According to the method provided in this application, when the terminal device requests to use the user identifier, the SMF may determine, based on the information about the user identifier, whether the terminal device is allowed to use the user identifier, to manage the user identifier.

FIG. 4 is a schematic flowchart of a specific example of a communication method 400 according to this application. In the method 400, it is assumed that a same SMF may establish or modify a session to obtain a network resource for a same user identifier. It should be understood that, for content that is not specially described in the method, refer to the foregoing descriptions. S401: A first terminal device sends a session establishment/modification request to an SMF #1, where the session establishment/modification request includes a user identifier.

This step is the same as S301. For details, refer to S401.

S402: The SMF #1 sends a request message to a second network element, where the request message includes the user identifier.

This step is an optional step.

For example, S402 may not be performed when the SMF #1 locally stores information about the user identifier; S402 may be performed when the SMF #1 locally stores only a part or none of parameters in information about the user identifier, for example, stores no first information or stores no first information and no value of Nmax.

When the SMF #1 needs to send the request message to the second network element, in a manner, the request message may include information requested by the SMF #1. In another manner, the request message may alternatively not include information requested by the SMF # 1. In this case, response information, namely, information that needs to be returned by the second network element to the SMF #1 after the second network element receives the request message, may be agreed upon in advance.

In addition, the information requested by the SMF #1 or the information returned by the second network element to the SMF #1 may be a subscription between a user and an operator, a subscription between a user and a third party, a joint subscription between a user and both an operator and a third party, or a subscription in another form. This is not limited in this application.

Optionally, the method may further include:
If the SMF #1 receives the session establishment request, and has no session management subscription data related to the first terminal device, the SMF #1 queries UDM for the session management subscription data.

If the SMF #1 receives the session modification request, and stores session management subscription data previously queried from UDM, the SMF #1 may not query the UDM for the session management subscription data again.

It should be understood that a sequence between S402 and the operation of querying the UDM for the session management subscription data by the SMF #1 is not limited in this application.

Optionally, the second network element and the UDM may be a same network element, in other words, the second network element may be the UDM. It should be understood that the second network element and the UDM may alternatively not be a same network element. This is not limited in this application.

S403: The second network element sends a response message to the SMF #1 in response to the request message.

The second network element returns the response message to the SMF #1 based on the request message sent by the SMF #1. The response message may include the information requested by the SMF #1 or the response information agreed upon in advance by the SMF #1 and the second network element.

It should be noted that if the second network element is the UDM, and the SMF #1 needs to query the UDM for the session management subscription data, the response message may include the session management subscription data, the session management subscription data and content carried in the response message may be sent by using a same message, or the session management subscription data and content carried in the response message may be sent by using different messages. How the UDM sends the response message (or the content carried in the response message) and the session management subscription data is not specifically limited in this application.

It may be understood that if the second network element has no information related to the user identifier, for example, has no first information, the second network element sends a reject message to the SMF #1. Optionally, the reject message may include a reject cause. For example, the reject cause is that the second network element has no information related to the user identifier.

S404: The SMF #1 determines, based on the information about the user identifier, whether the first terminal device is allowed to use the user identifier.

In the method, the SMF #1 establishes or modifies a session for the same user identifier. Therefore, the SMF #1 may locally store the information about the user identifier, store the information about the user identifier except the first information, or store the information about the user identifier except the first information and the value of Nmax. In this way, the SMF #1 may determine, based on the stored information and optionally with reference to related information (for example, the first information and/or the value of Nmax) in the session establishment/modification request or the response message, whether the first terminal device is allowed to use the user identifier.

For a specific manner of determining, by the second network element based on the information about the user identifier, whether the first terminal device is allowed to use the user identifier, refer to the manner 1 in the method 200 or step S304. Details are not described herein again.

S405: The SMF #1 sends a second message to the first terminal device.

This step is the same as S305. Refer to S305.

It should be understood that the SMF #1 may further update locally stored information, for example, update the quantity of terminal devices that are currently using the user identifier.

S406: The SMF #1 sends a third message to a third terminal device, where the third message is a session release/modification message.

The third terminal device is a preempted terminal device. Specifically, when preemption occurs, if a session is used only for a service related to the user identifier, the SMF #1 may send the session release message to the third terminal device to directly release the session; otherwise, the SMF #1 may send the session modification message to the third terminal device to release only a network resource allocated to the user identifier.

Optionally, the session release/modification message may include a cause, for example, that the user identifier has been occupied.

S407: The third terminal device returns a session release/modification complete message to the SMF #1.

After releasing the related session or network resource, the third terminal device returns the session release/modification complete message to the SMF #1.

According to the method provided in this application, when the terminal device requests to use the user identifier, the SMF may determine, based on the information about the user identifier, whether the terminal device is allowed to use the user identifier, to manage the user identifier.

FIG. 5 is a schematic flowchart of a specific example of a communication method 500 according to this application. It should be understood that, for content that is not specially described in the method, refer to the foregoing descriptions.

S501: A first terminal device sends a session establishment/modification request to an AMF

The first terminal device may send the session establishment/modification request to the AMF by using an uplink NAS transport message. The NAS transport message includes a user identifier.

Optionally, the uplink NAS transport message may further include first information.

S502: The AMF sends a request message to a second network element, where the request message includes the user identifier.

S503: The second network element sends a response message to the AMF in response to the request message.

It should be understood that the response message may be a downlink NAS transport message.

Steps S502 and S503 are similar to S302 and S303. To be specific, the AMF herein is similar to the SMF #1 in S302. For details, refer to S302 and S303.

S504: The AMF determines, based on the response message, whether the first terminal device is allowed to use the user identifier.

That is, the second network element determines, based on the response message, whether to accept the session establishment/modification request.

The AMF in this step is similar to the SMF #1 in S304. For details of this step, refer to S304.

S505: The AMF sends a second message to the first terminal device, where the second message may be a downlink NAS transport message.

If the AMF determines in S504 that the first terminal device is not allowed to use the user identifier, the AMF sends a session establishment/modification reject message to the first terminal device. Optionally, the session establishment/modification reject message may further include a reject cause, for example, that the quantity of terminal devices that are using the user identifier has reached a maximum value, that the user identifier has been used by another terminal device, or that the user identifier is invalid (the second network element has no information related to the user identifier).

S506: The AMF sends the session establishment/modification request to an SMF #1.

If the AMF determines in S504 that the first terminal device is allowed to use the user identifier, the AMF forwards the session establishment/modification request to the SMF #1.

S507: The SMF #1 sends a session establishment/modification accept message to the first terminal device.

If there is no other cause for rejecting the session establishment/modification request, the SMF #1 sends the session establishment/modification accept message to the first terminal device.

S508: The AMF sends an update message #1 (namely, an example of an update message) to the second network element.

This step is similar to S306. For details, refer to S306.

S509 to S512: When preemption occurs, the second network element sends a fourth message to an SMF #2, to indicate the SMF #2 to release a network resource on the preempted third terminal device that is allocated to the user identifier. After receiving the fourth message, the SMF #2 sends a session release/modification message to the third terminal device, to release the corresponding network resource. After completing releasing the network resource, the third terminal device returns a session release/modification complete message to the SMF #2. After receiving the session release/modification complete message, the SMF #2 sends an update message #2 to the second network element, to indicate that the network resource has been released.

Steps S509 to S512 are the same as steps S307 to S310. For details, refer to S307 to S310.

According to the method provided in this application, when the terminal device requests to use the user identifier, the AMF may request a third network element to determine, based on the information about the user identifier, whether the terminal device is allowed to use the user identifier, to manage the user identifier. In addition, this method in which the AMF determines in advance whether the terminal device is allowed to use the user identifier causes less signaling overheads than a method in which an SMF determines whether a terminal device is allowed to use a user identifier.

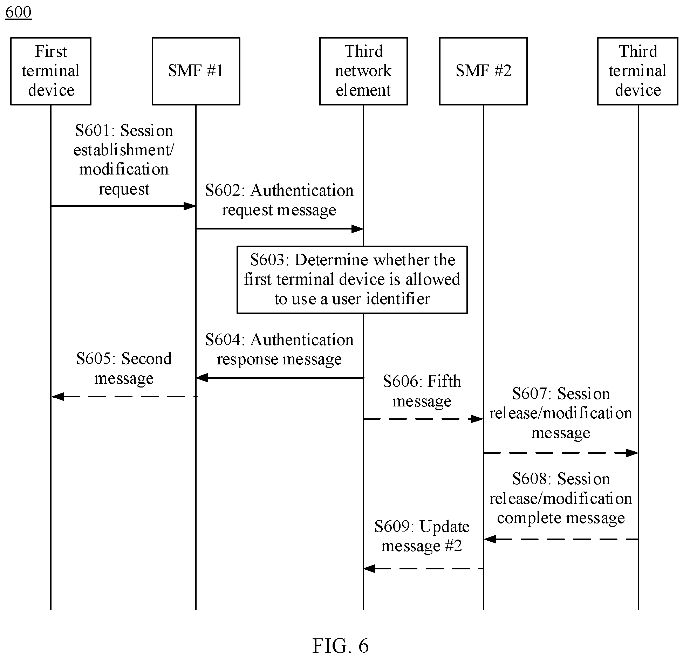

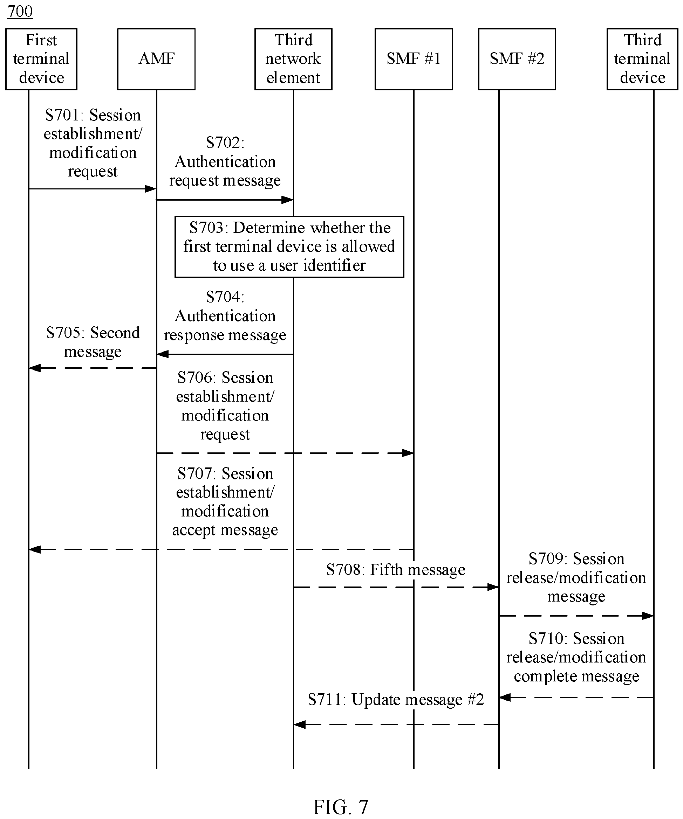

With reference to FIG. 6 and FIG. 7, the following describes a procedure for implementing the method provided in this application in the foregoing manner 2. For a specific example in which the first network element is the SMF (namely, an SMF #1 below), refer to FIG. 6. For a specific example in which the first network element is the AMF, refer to FIG. 7.

FIG. 6 is a schematic flowchart of a specific example of a communication method 600 according to this application. In the method 600, it is assumed that different SMFs may establish or modify sessions to obtain network resources for a same user identifier. It should be understood that, for content that is not specially described in the method, refer to the foregoing descriptions.

S601: A first terminal device sends a session establishment/modification request to an SMF #1, where the session establishment/modification request includes a user identifier.

This step is the same as S301. For details, refer to S301.

S602: The SMF #1 sends an authentication request message to a third network element.

The authentication request message includes the user identifier and is used to request the third network element to determine whether the first terminal device is allowed to use the user identifier.

Optionally, the authentication request message may further include the first information and/or information about a network resource.

Optionally, the third network element may be an authentication, authorization, and accounting server. However, this is not limited in this application.

It should be understood that if the third network element is not inside a core network, the SMF #1 cannot directly interact with the third network element. In this case, the SMF #1 may first establish a connection to a UPF or another network element, and the UPF or the another network element establishes a connection to the third network element. In this way, content exchanged between the SMF #1 and the third network element may be forwarded by the UPF or the another network element.

S603: The third network element determines, based on information about the user identifier, whether the first terminal device is allowed to use the user identifier.

The third network element can perceive a request for a resource for the user identifier from any terminal device, that is, the third network element has information indicating that any terminal device requests a resource for the user identifier. For example, when any terminal device requests a resource for the user identifier, the terminal device requests the third network element to perform authentication. For another example, when some terminal devices request resources for the user identifier, the terminal devices do not request the third network element to perform authentication, but notify the third network element when determining that the resources are allowed to be used for the user identifier.

In conclusion, similar to the SMF #1 in the method 400, the third network element stores the information about the user identifier, stores the information about the user identifier except the first information, or stores the information about the user identifier except the first information and a value of Nmax. Therefore, the third network element may determine, based on the stored information and optionally with reference to related information (for example, the first information and/or the value of Nmax) in the authentication request message, whether the first terminal device is allowed to use the user identifier.

A specific manner of determining, by the third network element based on the information about the user identifier, whether the first terminal device is allowed to use the user identifier is similar to a manner of determining, by a second network element based on information about a user identifier, whether a first terminal device is allowed to use the user identifier. For details, refer to the manner 1 in the method 200 or step S304. The details are not described herein again.

S604: The third network element sends an authentication response message to the SMF #1 in response to the authentication request message, where the authentication response message indicates whether the first terminal device is allowed to use the user identifier.

If the third network element determines that the first terminal device is allowed to use the user identifier, the authentication response message indicates that the first terminal device is allowed to use the user identifier. If the third network element determines that the first terminal device is not allowed to use the user identifier, that is, the authentication fails, the authentication response message indicates that the first terminal device is not allowed to use the user identifier.

Optionally, when the authentication response message indicates that the first terminal device is not allowed to use the user identifier, the authentication response message may further include an authentication failure cause, for example, that the user identifier has been occupied or the user identifier is invalid.

S605: The SMF #1 sends a second message to the first terminal device based on the authentication response message.

If the authentication response message indicates that the first terminal device is allowed to use the user identifier, the second message may be a session establishment/modification accept message, where the message indicates that the first terminal device is allowed to use the user identifier. If the authentication response message indicates that the first terminal device is not allowed to use the user identifier, the second message may be a session establishment/modification reject message, where the message indicates that the first terminal device is not allowed to use the user identifier.

Optionally, the session establishment/modification reject message may further include a reject cause, for example, that the user identifier has been used or the user identifier is invalid.

S606: The third network element sends a fifth message to an SMF #2.

The fifth message is similar to the fourth message in S307. For details of this step, refer to the description of S307.

S607 to S609: After receiving the third message, the SMF #2 sends a session release/modification message to a third terminal device to release a corresponding network resource. After completing releasing the network resource, the third terminal device returns a session release/modification complete message to the SMF #2. After receiving the session release/modification complete message, the SMF #2 sends an update message #2 to the third network element, to indicate that the network resource has been released.

Steps S607 to S609 are similar to steps S308 to S310. For details, refer to S308 to S310.

According to the method provided in this application, when the terminal device requests to use the user identifier, the SMF may request the third network element to determine, based on the information about the user identifier, whether the terminal device is allowed to use the user identifier, to manage the user identifier.

FIG. 7 is a schematic flowchart of a specific example of a communication method 700 according to this application. In the method 700, it is assumed that different SMFs may establish or modify sessions to obtain network resources for a same user identifier. It should be understood that, for content that is not specially described in the method, refer to the foregoing descriptions.

S701: A first terminal device sends a session establishment/modification request to an AMF

This step is the same as S501. For details, refer to S501.

S702: The AMF sends an authentication request message to a third network element.

The AMF herein is similar to the SMF #1 in S602. For this step, refer to S602.

S703: The third network element determines, based on information about the user identifier, whether the first terminal device is allowed to use the user identifier.

This step is the same as S603. Refer to S603.

S704: The third network element sends an authentication response message to the AMF in response to the authentication request message, where the authentication response message indicates whether the first terminal device is allowed to use the user identifier.

This step is similar to S604. Refer to S604.

S705: The AMF sends a second message to the first terminal device, where the second message may be a downlink NAS transport message, and the second message herein is a session establishment/modification reject message.

If the authentication response message indicates that the first terminal device is not allowed to use the user identifier, the AMF sends the session establishment/modification reject message to the first terminal device. Optionally, the session establishment/modification reject message may further include a reject cause, for example, that the user identifier has been used or the user identifier is invalid.

S706: The AMF sends the session establishment/modification request to an SMF #1.

If the authentication response message indicates that the first terminal device is allowed to use the user identifier, the AMF forwards the session establishment/modification request to the SMF #1.

S707: The SMF #1 sends a session establishment/modification accept message to the first terminal device.

If there is no other cause for rejecting the session establishment/modification request, the SMF #1 sends the session establishment/modification accept message to the first terminal device.

S708 to S711: The third network sends a fifth message to an SMF #2. After receiving the fifth message, the SMF #2 sends a session release/modification message to a third terminal device to release a corresponding network resource. After completing releasing the network resource, the third terminal device returns a session release/modification complete message to the SMF #2. After receiving the session release/modification complete message, the SMF #2 sends an update message #2 to a second network element, to indicate that the network resource has been released.

Steps S708 to S711 are the same as steps S606 to S609. For details, refer to S606 to S609.

According to the method provided in this application, when the terminal device requests to use the user identifier, the AMF may request the third network element to determine, based on the information about the user identifier, whether the terminal device is allowed to use the user identifier, to manage the user identifier.

It should be understood that, in all the method 500 to the method 700, it is assumed that different SMFs may establish or modify sessions to obtain network resources for a same user identifier. A person skilled in the art may correspondingly modify the method 500 to the method 700 according to the method 200, to obtain corresponding methods used in a scenario in which a same SMF establishes or modifies a session to obtain a network resource for a same user identifier.

It should be understood that the solutions in embodiments of this application may be properly combined for use, and explanations or descriptions of the terms in embodiments may be cross-referenced or explained in the embodiments. This is not limited.

It should be further understood that sequence numbers of the foregoing processes do not mean execution sequences in various embodiments of this application. The execution sequences of the processes should be determined based on functions and internal logic of the processes. Numbers or sequence numbers in the foregoing processes are merely used for differentiation for ease of description, and should not constitute any limitation on an implementation process of embodiments of this application.

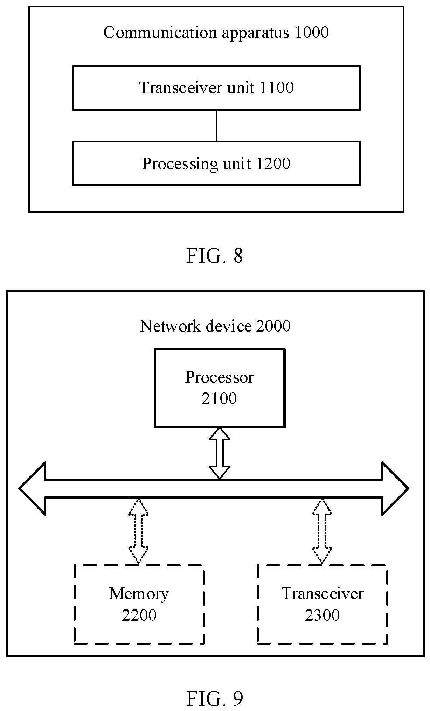

The methods provided in embodiments of this application are described above in detail with reference to FIG. 2 to FIG. 7. Apparatuses provided in embodiments of this application are described below in detail with reference to FIG. 8 to FIG. 10.

FIG. 8 is a schematic block diagram of a communication apparatus according to an embodiment of this application. As shown in FIG. 8, the communication apparatus 1000 may include a transceiver unit 1100 and a processing unit 1200.

The transceiver unit 1100 may be configured to send information to another apparatus or receive information from another apparatus, for example, send or receive a first message. The processing unit 1200 may be configured to perform processing inside the apparatus, to determine whether a first terminal device is allowed to use a user identifier.

In an implementation, the communication apparatus 1000 may correspond to the first network element in the foregoing method embodiments. For example, the communication apparatus 1000 may correspond to the first network element in the method 200, the SMF #1 in any one of the method 300, the method 400, and the method 600, or the AMF in either of the method 500 and the method 700. The communication apparatus 1000 may be the first network element or a chip configured in the first network element, and may include units configured to perform operations performed by the first network element. In addition, the units in the communication apparatus 1000 are separately configured to implement the operations performed by the first network element in the corresponding method.

Specifically, the transceiver unit 1100 is configured to receive a first message sent by a first terminal device, where the first message includes a user identifier and is used by the first terminal device to request to use the user identifier. The processing unit 1200 is configured to determine whether the first terminal device is allowed to use the user identifier, where only a preset quantity of terminal devices are allowed to simultaneously use the user identifier.

Optionally, the processing unit 1200 is specifically configured to determine, based on information about the user identifier, whether the first terminal device is allowed to use the user identifier, where the information about the user identifier includes the preset quantity and a quantity of terminal devices that are currently using the user identifier.

Optionally, the information about the user identifier further includes a priority of using the user identifier by the first terminal device and a priority of using the user identifier by a terminal device that is currently using the user identifier.

Optionally, the information about the user identifier further includes a preemption capability of the first terminal device for the user identifier and/or preemption vulnerability of the terminal device that is currently using the user identifier. The preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier. Preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, where the second terminal device is any one of the terminal devices that are currently using the user identifier.

Optionally, the first message includes the priority of using the user identifier by the first terminal device and/or the preemption capability of the first terminal device for the user identifier.

Optionally, the transceiver unit 1100 is further configured to obtain a part or all of the information about the user identifier from a second network element based on the first message.

Optionally, the second network element is a unified data management network element.

Optionally, when the processing unit 1200 determines that the first terminal device is allowed to use the user identifier, the transceiver unit 1100 is further configured to send an update message to the second network element, where the update message includes the user identifier and indicates that the first terminal device is allowed to use the user identifier.

Optionally, the processing unit 1200 is specifically configured to: control the transceiver unit 1100 based on the first message to send an authentication request message to a third network element, where the authentication request message includes the user identifier and is used to request the third network element to determine whether the first terminal device is allowed to use the user identifier; control the transceiver unit 1100 to receive an authentication response message that is sent by the third network element in response to the authentication request message, where the authentication response message indicates whether the first terminal device is allowed to use the user identifier; and determine, based on the authentication response message, whether the first terminal device is allowed to use the user identifier.

Optionally, the third network element is an authentication, authorization, and accounting server.

Optionally, the first message and the authentication request message each include a priority of using the user identifier by the first terminal device and/or a preemption capability of the first terminal device for the user identifier. The preemption capability of the first terminal device for the user identifier indicates: if a quantity of terminal devices that are currently using the user identifier is equal to the preset quantity, and the priority of using the user identifier by the first terminal device is higher than or equal to a priority of using the user identifier by one or more of terminal devices that are currently using the user identifier, whether the first terminal device is capable of using the user identifier.

Optionally, the apparatus 1000 is a session management network element or an access and mobility management network element.

Optionally, the transceiver unit 1100 is further configured to send a second message to the first terminal device in response to the first message, where the second message indicates whether the first terminal device is allowed to use the user identifier.

Optionally, the processing unit 1200 is further configured to determine that a third terminal device is incapable of continuing to use the user identifier, where the third terminal device is a terminal device that is currently using the user identifier. The transceiver unit 1100 is further configured to send a third message to the third terminal device, where the third indication message indicates that the third terminal device is not allowed to use the user identifier.

In another implementation, the communication apparatus 1000 may correspond to the second network element in the foregoing method embodiments. For example, the communication apparatus 1000 may correspond to the second network element in any one of the method 300, the method 400, and the method 500. The communication apparatus 1000 may be the second network element or a chip configured in the second network element, and may include units configured to perform operations performed by the second network element. In addition, the units in the communication apparatus 1000 are separately configured to implement the operations performed by the second network element in the corresponding method.

Specifically, the transceiver unit 1100 is configured to: receive a request message sent by a first network element, where the request message includes a user identifier and is used to request information about the user identifier; and send a response message to the first network element in response to the request message, where the response message includes the information about the user identifier, the information about the user identifier is used by the first network element to determine whether a first terminal device is allowed to use the user identifier, and only a preset quantity of terminal devices are allowed to simultaneously use the user identifier.

Optionally, the information about the user identifier includes one or more of the following information: a quantity of terminal devices that are currently using the user identifier, the preset quantity, a priority of using the user identifier by the first terminal device, a priority of using the user identifier by a terminal device that is currently using the user identifier, a preemption capability of the first terminal device for the user identifier, or preemption vulnerability of the terminal device that is currently using the user identifier. The preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier. Preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, where the second terminal device is any one of the terminal devices that are currently using the user identifier.

Optionally, the apparatus 1000 is a unified data management network element.

Optionally, the receiving unit 1100 is further configured to receive an update message sent by the first network element, where the update message includes the user identifier and indicates that the first terminal device is allowed to use the user identifier.

Optionally, the first network element is a session management network element or an access and mobility management network element.

Optionally, the receiving unit 1100 is further configured to send a fourth message to a session management network element, where the fourth message indicates that a third terminal device is not allowed to continue to use the user identifier, and the third terminal device is a terminal device that is currently using the user identifier.

In still another implementation, the communication apparatus 1000 may correspond to the third network element in the foregoing method embodiments. For example, the communication apparatus 1000 may correspond to the third network element in the method 600 or the method 700. The communication apparatus 1000 may be the third network element or a chip configured in the third network element, and may include units configured to perform operations performed by the third network element. In addition, the units in the communication apparatus 1000 are separately configured to implement the operations performed by the third network element in the corresponding method.

Specifically, the transceiver unit 1100 is configured to receive an authentication request message sent by a first network element, where the authentication request message includes a user identifier, only a preset quantity of terminal devices are allowed to use the user identifier, and the authentication request message is used to request the processing unit 1200 to determine whether a first terminal device is allowed to use the user identifier. The processing unit 1200 is configured to determine, based on information about the user identifier, whether the first terminal device is allowed to use the user identifier, where the information about the user identifier includes the preset quantity and a quantity of terminal devices that are currently using the user identifier. The transceiver unit 1100 is further configured to send an authentication response message to the first network element in response to the authentication request message, where the authentication response message indicates whether the first terminal device is allowed to use the user identifier.

Optionally, the information about the user identifier further includes a priority of using the user identifier by the first terminal device and a priority of using the user identifier by a terminal device that is currently using the user identifier.

Optionally, the information about the user identifier further includes a preemption capability of the first terminal device for the user identifier and/or preemption vulnerability of the terminal device that is currently using the user identifier. The preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier. Preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, where the second terminal device is any one of the terminal devices that are currently using the user identifier.

Optionally, the authentication request message includes the priority of using the user identifier by the first terminal device and/or the preemption capability of the first terminal device for the user identifier.

Optionally, the first network element is a session management network element or an access and mobility management network element.

Optionally, the transceiver unit 1100 is further configured to send a fifth message to a session management network element, where the fifth message indicates that a third terminal device is not allowed to continue to use the user identifier, and the third terminal device is a terminal device that is currently using the user identifier.

Optionally, the apparatus 1000 is an authentication, authorization, and accounting server.

In still another implementation, the communication apparatus 1000 may correspond to the first terminal device in the foregoing method embodiments. For example, the communication apparatus 1000 may correspond to the first terminal device in any one of the method 200 to the method 700. The communication apparatus 1000 may be the first terminal device or a chip configured in the first terminal device, and may include units configured to perform operations performed by the first terminal device. In addition, the units in the communication apparatus 1000 are separately configured to implement the operations performed by the first terminal device in the corresponding method.

Specifically, the processing unit 1200 is configured to generate a first message, where the first message includes a user identifier and is used by the apparatus 1000 to request to use the user identifier, and only a preset quantity of terminal devices are allowed to simultaneously use the user identifier. The transceiver unit 1100 is configured to send the first message to a first network element.

Optionally, the transceiver unit 1100 is further configured to receive a second message that is sent by the first network element in response to the first message, where the second message indicates whether the apparatus 1000 is allowed to use the user identifier.

It should be understood that, a specific process in which each unit performs the foregoing corresponding step performed by the corresponding network element has been described in detail in the foregoing method embodiments. For brevity, details are not described herein again.

It should be further understood that, when the communication apparatus 1000 is the first network element, the second network element, or the third network element, the transceiver unit 1100 in the communication apparatus 1000 may correspond to a transceiver 2300 in a network device 2000 shown in FIG. 9, and the processing unit 1200 in the communication apparatus 1000 may correspond to a processor 2100 in the network device 2000 shown in FIG. 9. When the communication apparatus 1000 is a chip configured in the network device, the transceiver unit 1100 in the communication apparatus 1000 may be an input/output interface.

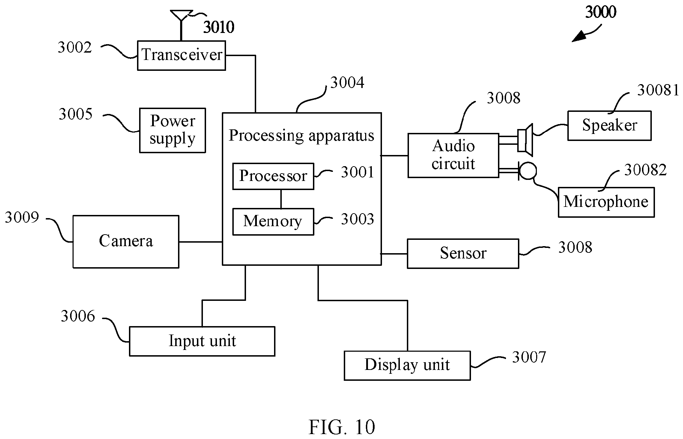

It should be further understood that, when the communication apparatus 1000 is the first terminal device, the transceiver unit 1100 in the communication apparatus 1000 may correspond to a transceiver 3002 in a terminal device 3000 shown in FIG. 10, and the processing unit 1200 in the communication apparatus 1000 may correspond to a processor 3001 in the terminal device 3000 shown in FIG. 10.

FIG. 9 is a schematic diagram of a structure of a network device according to an embodiment of this application. Any one of the first network element, the second network element, and the third network element may be implemented by the network device 2000 shown in FIG. 9. It should be understood that the network device 2000 may be a physical device, or may be a component (for example, an integrated circuit or a chip) of the physical device.

As shown in FIG. 9, the network device 2000 includes one or more processors 2100. The processor 2100 may store executable instructions for performing the methods in embodiments of this application. Optionally, the processor 2100 may invoke an interface to implement receiving and sending functions. The interface may be a logical interface or a physical interface. This is not limited. For example, the interface may be a transceiver circuit or an interface circuit. A transceiver circuit or an interface circuit configured to implement the receiving function and a transceiver circuit or an interface circuit configured to implement the sending function may be separate or may be integrated together. The transceiver circuit or the interface circuit may be configured to read and write code/data; or the transceiver circuit or the interface circuit may be configured to transmit or transfer a signal.

Optionally, the interface may be implemented by a transceiver. Optionally, the network device 2000 may further include a transceiver 2300. The transceiver 2300 may be referred to as a transceiver unit, a transceiver, a transceiver circuit, or the like, and is configured to implement the receiving and sending functions.

Optionally, the network device 2000 may further include a memory 2200. A specific deployment location of the memory 2200 is not specifically limited in this embodiment of this application. The memory may be integrated into the processor, or may be independent of the processor. In a case in which the computer device does not include a memory, the computer device only needs to have a processing function, and the memory may be deployed in another location (for example, a cloud system).

The processor 2100, the memory 2200, and the transceiver 2300 communicate with each other through an internal connection path, to transmit a control signal and/or a data signal.

It may be understood that although not shown, other modules such as a battery may be further included in the network device 2000.

Optionally, in some embodiments, the memory 2200 may store the executable instructions for performing the methods in embodiments of this application. The processor 2100 may execute the instructions stored in the memory 2200, to complete steps in the foregoing methods in combination with other hardware (for example, the transceiver 2300). For a specific working process and beneficial effects, refer to the descriptions in the foregoing method embodiments.

The processor 2100 may be an integrated circuit chip, and has a signal processing capability. In an implementation process, the steps of the methods may be performed through a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in a decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 2200 may be a volatile memory or a nonvolatile memory, or may include both a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM that is used as an external cache. By way of example but not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

The foregoing network device 2000 may be a general-purpose computer device or a special-purpose computer device. During specific implementation, the network device 2000 may be a desktop computer, a portable computer, a network server, a palmtop computer (personal digital assistant, PDA), a mobile phone, a tablet computer, a wireless terminal device, a communication device, an embedded device, or a device with a structure similar to that in FIG. 9. A type of the network device 2000 is not limited in this embodiment of this application.

FIG. 10 is a schematic diagram of a structure of a terminal device 3000 according to an embodiment of this application. As shown in the figure, the terminal device 3000 includes a processor 3001 and a transceiver 3002. Optionally, the terminal device 3000 may further include a memory 3003. The processor 3001, the transceiver 3002, and the memory 3003 may communicate with each other through an internal connection path, to transmit a control signal and/or a data signal. The memory 3003 is configured to store a computer program. The processor 3001 is configured to invoke the computer program from the memory 3003 and run the computer program, to control the transceiver 3002 to send and receive a signal.

The processor 3001 and the memory 3003 may be integrated into one processing apparatus 3004, and the processor 3001 is configured to execute program code stored in the memory 3003, to implement the foregoing functions. It should be understood that the processing apparatus 3004 shown in the figure is merely an example. During specific implementation, the memory 3003 may alternatively be integrated into the processor 3001, or may be independent of the processor 3001. This is not limited in this application.

In an example, when program instructions stored in the memory 3003 are executed by the processor 3001, the processor 3001 is configured to: generate a first message, and control the transceiver 3002 to send the first message to a first network element. The first message includes a user identifier and is used by the apparatus 3000 to request to use the user identifier, and only a preset quantity of terminal devices are allowed to simultaneously use the user identifier.

The terminal device 3000 may further include an antenna 3010, configured to send, by using a radio signal, uplink data or uplink control signaling that is output by the transceiver 3002.

Optionally, the terminal device 3000 may further include a power supply 3005, configured to supply power to various components or circuits in the terminal device.

In addition, the terminal device 3000 may further include one or more of an input unit 3006, a display unit 3007, an audio circuit 3008, a camera 3009, a sensor 3011, and the like, to better improve functions of the terminal device. The audio circuit may further include a speaker 30081, a microphone 30082, and the like.

It should be understood that the processing apparatus may be a chip. For example, the processing apparatus may be a field programmable gate array (field programmable gate array, FPGA), a general-purpose processor, a digital signal processor (digital signal processor, DSP), an application-specific integrated circuit (application-specific integrated circuit, ASIC), another programmable logic device, a discrete gate or a transistor logic device, a discrete hardware component, a system on a chip (system on a chip, SoC), a central processing unit (central processing unit, CPU), a network processor (network processor, NP), a digital signal processing circuit, a microcontroller unit (microcontroller unit, MCU), a programmable logic device (programmable logic device, PLD), or another integrated chip. The processing apparatus may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory 3003 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory in the systems and methods described in this specification includes but is not limited to these memories and any memory of another appropriate type.

This application further provides a computer program product. The computer program product includes computer program code. When the computer program code is run on a computer, the computer is enabled to perform the method performed by the first network element in any one of the foregoing method embodiments.

This application further provides a computer-readable medium. The computer-readable medium stores program code. When the program code is run on a computer, the computer is enabled to perform the method performed by the second network element in the foregoing method embodiments.

This application further provides a computer-readable medium. The computer-readable medium stores program code. When the program code is run on a computer, the computer is enabled to perform the method performed by the third network element in the foregoing method embodiments.

This application further provides a computer-readable medium. The computer-readable medium stores program code. When the program code is run on a computer, the computer is enabled to perform the method performed by the first terminal device in the foregoing method embodiments.

This application further provides a system, including any two of a first network element, a second network element, and a third network element. Optionally, the system may further include a first terminal device.

This application further provides a system, including any two network elements in any one of the foregoing method embodiments.

An embodiment of this application further provides a processing apparatus, including a processor and an interface. The processor is configured to perform the method performed by any network element in any one of the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, or a computer. As illustrated in figures, both a computing device and an application that runs on the computing device may be components. One or more components may reside within a process or a thread of execution, and a component may be located on one computer or distributed between two or more computers. In addition, these components may be executed from various computer-readable media that store various data structures. For example, the components may communicate by using a local or remote process based on, for example, a signal having one or more data packets (for example, data from two components interacting with another component in a local system or a distributed system or across a network such as the Internet interacting with another system by using the signal).

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute a limitation on the scope of embodiments of this application. Embodiments of this application are not limited thereto.

It should be further understood that, in this application, "when" and "if' mean that a network element performs corresponding processing in an objective situation, are not intended to limit time, and do not mean any other limitation, and the network element is not necessarily required to perform a determining action during implementation.

It should be further understood that, in this application, "at least one" means one or more, and "a plurality of' means two or more.

It should be further understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

It should also be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

Unless otherwise specified, an expression used in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that in embodiments of this application, the terminal device and/or the network device may perform some or all of the steps in embodiments of this application. These steps or operations are merely examples. In embodiments of this application, other operations or variations of various operations may alternatively be performed. In addition, the steps may be performed in a sequence different from the sequence presented in embodiments of this application, and not all the operations in embodiments of this application are necessarily to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, a first message sent by a first terminal device, wherein the first message comprises a user identifier and is used by the first terminal device to request to use the user identifier; and
determining, by the first network element, whether the first terminal device is allowed to use the user identifier, wherein only a preset quantity of terminal devices are allowed to simultaneously use the user identifier.

2. The method according to claim 1, wherein the determining, by the first network element, whether the first terminal device is allowed to use the user identifier comprises:
determining, by the first network element based on information about the user identifier, whether the first terminal device is allowed to use the user identifier, wherein the information about the user identifier comprises the preset quantity and a quantity of terminal devices that are currently using the user identifier.

3. The method according to claim 2, wherein the information about the user identifier further comprises a priority of using the user identifier by the first terminal device and a priority of using the user identifier by a terminal device that is currently using the user identifier.

4. The method according to claim 3, wherein the information about the user identifier further comprises a preemption capability of the first terminal device for the user identifier and/or preemption vulnerability of the terminal device that is currently using the user identifier, wherein
the preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier; and
preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, wherein the second terminal device is any one of the terminal devices that are currently using the user identifier.

5. The method according to claim 4, wherein the first message comprises the priority of using the user identifier by the first terminal device and/or the preemption capability of the first terminal device for the user identifier.

6. The method according to any one of claims 2 to 5, wherein the method further comprises:
obtaining, by the first network element, a part or all of the information about the user identifier from a second network element based on the first message.

7. The method according to claim 6, wherein the second network element is a unified data management network element.

8. The method according to claim 6 or 7, wherein if the first network element determines that the first terminal device is allowed to use the user identifier, the method further comprises:
sending, by the first network element, an update message to the second network element, wherein the update message comprises the user identifier and indicates that the first terminal device is allowed to use the user identifier.

9. The method according to claim 1, wherein the determining, by the first network element, whether the first terminal device is allowed to use the user identifier comprises:
sending, by the first network element, an authentication request message to a third network element based on the first message, wherein the authentication request message comprises the user identifier and is used to request the third network element to determine whether the first terminal device is allowed to use the user identifier;
receiving, by the first network element, an authentication response message that is sent by the third network element in response to the authentication request message, wherein the authentication response message indicates whether the first terminal device is allowed to use the user identifier; and
determining, by the first network element based on the authentication response message, whether the first terminal device is allowed to use the user identifier.

10. The method according to claim 9, wherein the third network element is an authentication, authorization, and accounting server.

11. The method according to claim 9 or 10, wherein the first message and the authentication request message each comprise a priority of using the user identifier by the first terminal device and/or a preemption capability of the first terminal device for the user identifier, wherein
the preemption capability of the first terminal device for the user identifier indicates: if a quantity of terminal devices that are currently using the user identifier is equal to the preset quantity, and the priority of using the user identifier by the first terminal device is higher than or equal to a priority of using the user identifier by one or more of terminal devices that are currently using the user identifier, whether the first terminal device is capable of using the user identifier.

12. The method according to any one of claims 1 to 11, wherein the first network element is a session management network element or an access and mobility management network element.

13. The method according to any one of claims 1 to 12, wherein the method further comprises:
sending, by the first network element, a second message to the first terminal device in response to the first message, wherein the second message indicates whether the first terminal device is allowed to use the user identifier.

14. The method according to any one of claims 1 to 13, wherein the method further comprises:
determining, by the first network element, that a third terminal device is incapable of continuing to use the user identifier, wherein the third terminal device is a terminal device that is currently using the user identifier; and
sending, by the first network element, a third message to the third terminal device, wherein the third indication message indicates that the third terminal device is not allowed to use the user identifier.

15. A communication method, comprising:
receiving, by a second network element, a request message sent by a first network element, wherein the request message comprises a user identifier and is used to request information about the user identifier; and
sending, by the second network element, a response message to the first network element in response to the request message, wherein the response message comprises the information about the user identifier, the information about the user identifier is used by the first network element to determine whether a first terminal device is allowed to use the user identifier, and only a preset quantity of terminal devices are allowed to simultaneously use the user identifier.

16. The method according to claim 15, wherein the information about the user identifier comprises one or more of the following information:
a quantity of terminal devices that are currently using the user identifier, the preset quantity, a priority of using the user identifier by the first terminal device, a priority of using the user identifier by a terminal device that is currently using the user identifier, a preemption capability of the first terminal device for the user identifier, or preemption vulnerability of the terminal device that is currently using the user identifier, wherein
the preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier; and
preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, wherein the second terminal device is any one of the terminal devices that are currently using the user identifier.

17. The method according to claim 15 or 16, wherein the method further comprises:
receiving, by the second network element, an update message sent by the first network element, wherein the update message comprises the user identifier and indicates that the first terminal device is allowed to use the user identifier.

18. The method according to any one of claims 15 to 17, wherein the method further comprises:
sending, by the second network element, a fourth message to a session management network element, wherein the fourth message indicates that a third terminal device is not allowed to continue to use the user identifier, and the third terminal device is a terminal device that is currently using the user identifier.

19. A communication method, comprising:
receiving, by a third network element, an authentication request message sent by a first network element, wherein the authentication request message comprises a user identifier, only a preset quantity of terminal devices are allowed to simultaneously use the user identifier, and the authentication request message is used to request the third network element to determine whether a first terminal device is allowed to use the user identifier;
determining, by the third network element based on information about the user identifier, whether the first terminal device is allowed to use the user identifier, wherein the information about the user identifier comprises the preset quantity and a quantity of terminal devices that are currently using the user identifier; and
sending, by the third network element, an authentication response message to the first network element in response to the authentication request message, wherein the authentication response message indicates whether the first terminal device is allowed to use the user identifier.

20. The method according to claim 19, wherein the information about the user identifier further comprises a priority of using the user identifier by the first terminal device and a priority of using the user identifier by a terminal device that is currently using the user identifier.

21. The method according to claim 20, wherein the information about the user identifier further comprises a preemption capability of the first terminal device for the user identifier and/or preemption vulnerability of the terminal device that is currently using the user identifier, wherein
the preemption capability of the first terminal device for the user identifier indicates: if the quantity of terminal devices that are currently using the user identifier is equal to the preset quantity, and the priority of using the user identifier by the first terminal device is higher than or equal to a priority of using the user identifier by one or more of the terminal devices that are currently using the user identifier, whether the first terminal device is capable of using the user identifier; and
preemption vulnerability of a second terminal device indicates: if the quantity of terminal devices that are currently using the user identifier is equal to the preset quantity, and the priority of using the user identifier by the first terminal device is higher than or equal to a priority of using the user identifier by the second terminal device, whether the first terminal device is allowed to use the user identifier, and whether the second terminal device is prohibited from continuing to use the user identifier, wherein the second terminal device is any one of the terminal devices that are currently using the user identifier.

22. The method according to claim 21, wherein the authentication request message comprises the priority of using the user identifier by the first terminal device and/or the preemption capability of the first terminal device for the user identifier.

23. The method according to any one of claims 19 to 22, wherein the method further comprises:
sending, by the third network element, a fifth message to a session management network element, wherein the fifth message indicates that a third terminal device is not allowed to continue to use the user identifier, and the third terminal device is a terminal device that is currently using the user identifier.

24. A communication method, comprising:
generating, by a first terminal device, a first message, wherein the first message comprises a user identifier and is used by the first terminal device to request to use the user identifier, and only a preset quantity of terminal devices are allowed to simultaneously use the user identifier; and
sending, by the first terminal device, the first message to a first network element.

25. The method according to claim 24, wherein the method further comprises:
receiving, by the first terminal device, a second message that is sent by the first network element in response to the first message, wherein the second message indicates whether the first terminal device is allowed to use the user identifier.

26. A communication apparatus, configured to perform the method according to any one of claims 1 to 14.

27. A communication apparatus, configured to perform the method according to any one of claims 15 to 18.

28. A communication apparatus, configured to perform the method according to any one of claims 19 to 23.

29. A communication apparatus, configured to perform the method according to claim 24 or 25.

30. A readable storage medium, storing a computer program or instructions, wherein when the computer program or the instructions is/are executed, a computer is enabled to perform the method according to any one of claims 1 to 25.

31. A communication system, comprising the communication apparatuses according to at least two of claims 26 to 28.
